# FASCICULE DE BREVET EUROPEEN

(11) **EP 2 683 626 B1**
(45) Date de publication et mention de la délivrance du brevet: **28.02.2018**
(21) Numéro de dépôt: 12715158.7
(22) Date de dépôt: 07.03.2012
(51) Int. Cl.: B65D 85/804

(54) **CAPSULE POUR LA PREPARATION D'UNE BOISSON**
KAPSEL ZUR HERSTELLUNG EINES GETRÄNKS
CAPSULE FOR PREPARING A BEVERAGE

(30) Priorité: 07.03.2011 WO PCT/IB2011/050953
(43) Date de publication de la demande: 15.01.2014
(73) Titulaire: Ethical Coffee Company SA, 1700 Fribourg (CH)
(72) Inventeur: MARILLER, Alain, CH-1801 Le Mont-Pèlerin (CH)
(74) Mandataire: August & Debouzy avocats
(86) Numéro de dépôt international: PCT/IB2012/051067
(87) Numéro de publication internationale: WO 2012/120459

(56) Documents cités:
- EP-A1- 1 654 966
- EP-A1- 1 849 715
- EP-A1- 2 151 313
- WO-A2-2007/137974
- DE-A1-102008 014 758

## Description

### Domaine de l'invention

La présente invention se situe dans le domaine de la préparation de boissons, p.ex. à base de café, par extraction d'une dose concentrée, p.ex. de café moulu, contenue dans une capsule selon le préambule de la revendication 1.

### Etat de la technique

Des capsules et des machines fonctionnant selon le principe précité existent depuis de nombreuses décennies.

Les brevets US 2 899 886, US 2 968 560, US 3 403 617 et US 3 607 297 décrivent des dispositifs ou la capsule est initialement perforée en plusieurs endroits, puis traversée par de l'eau sous pression.

La capsule décrite dans le brevet CH 605 293 ou dans le brevet EP 0 242 556 B1 comporte une membrane dans sa partie inférieure. De l'eau sous pression est initialement introduite dans la partie supérieure de la capsule, ce qui entraine un gonflement de la capsule, principalement au niveau de la membrane. A partir d'une certaine pression, la membrane se déchire, autorisant de la sorte l'écoulement d'un mélange eau-café.

D'autres capsules munies d'une membrane sont décrites dans les documents brevets suivants: EP 0 468 079 A, EP 0 806 373 A, EP 0 554 469 A.

Le document WO2007137974 divulgue un emballage pour recevoir une substance pour produire une boisson comprenant un élément d'étanchéité déformable configuré comme une rebord de prolongement qui a essentiellement une forme elliptique ou ovale en coupe transversale, la hauteur du rebord de prolongement étant plus grande que sa hauteur.

### Expose général de l'invention

Un des objectifs de la présente invention réside dans une amélioration de la circulation du liquide au travers de la capsule et l'invention vise à éviter que du liquide s'écoule le long de la paroi latérale de la capsule et également d'optimiser le couple "capsule - porte capsule" en proposant des moyens spécifiques coopérant entre eux pour obtenir un fonctionnement optimise.

Ces objectifs sont réalisés avec la capsule et le dispositif tels que définis dans les revendications.

Une capsule pour la préparation d'une boisson selon la revendication 1 comprend un élément creux destiné à contenir un produit, ledit élément creux comprenant une paroi latérale, une face supérieure, une face inferieure et un rebord prolongeant ladite paroi latérale, ledit rebord comprend des moyens déformables ayant une forme induisant une déformation dirigée desdits moyens par production d'un repli, lesdits moyens déformables étant configurés pour être entièrement aplatis pour former un joint d'étanchéité.

Selon la présente invention, pour répondre, notamment, aux problèmes d'étanchéité des capsules existantes, on prévoit au minimum, sur une partie de la capsule, par exemple sur le rebord de celle-ci, des moyens déformables qui coopèrent avec des moyens de déformation correspondants places sur le porte capsule (ou sur un élément fixe ou une partie dudit porte-capsule).

Typiquement, les moyens déformables peuvent être une collerette déformable sur le rebord de la capsule. Cette collerette peut être formée dans ledit rebord ou être rapportée sur celui-ci. De préférence, cette collerette (les moyens déformables) subit une déformation plastique lors de l'emploi de la capsule. Alternativement, on pourrait envisager une déformation élastique.

De façon correspondante, les moyens de déformation du porte-capsule peuvent etre une rainure formée dans un bord inférieur dudit porte-capsule, ladite rainure permettant de déformer de façon dirigée la collerette. La forme de cette rainure peut être quelconque mais de préférence, elle est telle qu'elle favorise une déformation dirigée des moyens déformables de la capsule. De préférence, cette rainure a une forme arrondie.

De plus, on peut prévoir des moyens additionnels (par exemple une matière spécifique ou une forme) sur le porte-capsule (en particulier sur le moyen de deformation) dont la résistance est adaptée a celle des moyens déformables de la capsule, par exemple à celle de la collerette, de façon que seuls des moyens déformables ayant une résistance maximale prédéterminée soient correctement déformées par le porte-capsule. Selon ce principe, l'utilisation d'une capsule dont la collerette aurait une résistance supérieure a celle prédéterminée aurait pour
résultat une déformation temporaire ou permanente du porte-capsule (à savoir notamment des moyens de déformation), ou de la pièce portant lesdits moyens de déformation. Ceci permettrait d'éviter l'usage de capsules non-adaptées au porte-capsule (et à la machine) considéré en nuisant notamment à l'étanchéité.

Un effet de la présente invention est qu'elle permet une "optimisation" du couple capsule - porte capsule en ce que les moyens prévus sont d'une façon qui optimise le fonctionnement de la machine puisque on obtient un couple optimal des éléments constitutifs du système et la déformation des moyens déformables renforce l'étanchéité du système.

Plusieurs façons équivalentes de former les moyens sont possibles et les exemples de réalisation dans la présente demande sont donnés à titre illustratif. Bien entendu, ils ne doivent pas être considérés comme limitatifs et des variations sont possibles notamment par l'emploi de moyens équivalents.

### Exposé détaillé de l'invention

L'invention est décrite plus en détail ci-après au moyen d'exemples illustrés par les figures suivantes :
La figure 1 présente une coupe partielle d'un mode de réalisation d'un dispositif et d'une capsule selon l'invention dans une première position.
La figure 2 présente une coupe partielle d'un mode de réalisation d'un dispositif et d'une capsule selon l'invention dans une deuxième position.
La figure 3 présente une coupe partielle d'un mode de réalisation d'un dispositif et d'une capsule selon l'invention dans une troisième position.

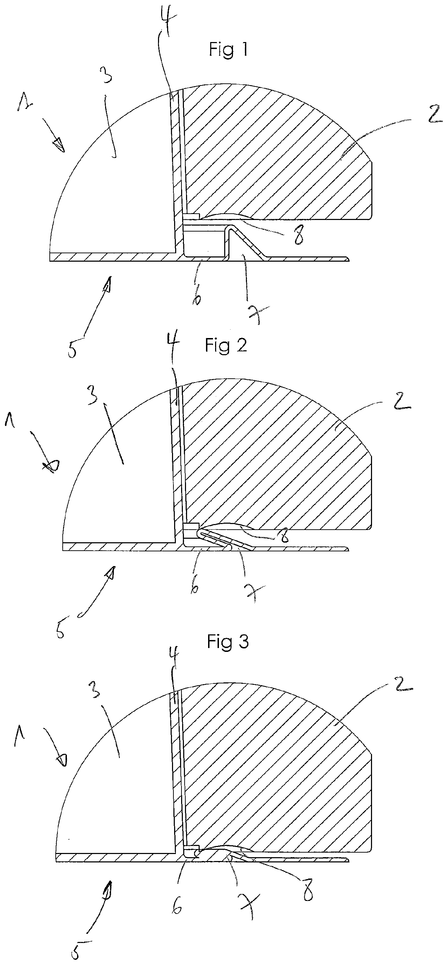

Comme illustré dans la figure 1 (et de façon connue dans le domaine des capsules à café par exemple), une capsule 1 contenant un produit 3 (par exemple du café moulu) est introduite dans un porte-capsule 2. La capsule comprend notamment un corps de forme généralement cylindrique 4 et un fond 5 avec une membrane (non illustrée) au travers de laquelle du liquide introduit sous pression sort quand il a traversé le produit 3.

La capsule 4 comprend notamment un rebord 6 sur lequel sont prévus les moyens déformables 7. Dans l'exemple non-limitatif des figures, ces moyens comprennent une collerette 7 formée par le rebord 6. Alternativement, cette collerette peut être rapportée sur le rebord 6. En coupe, la collerette a une forme illustrée généralement triangulaire mais cette représentation n'est pas limitative et d'autres formes équivalentes sont possibles. La forme choisie pour les moyens déformables induit une déformation dirigée desdits moyens déformables. Cette déformation induite peut être intrinsèque ou alors elle peut être aidée et/ou provoquée par les moyens de déformation 8 du porte-capsule 2. Ces moyens de déformation 8 sont par exemple (comme illustré) une rainure formée dans la partie inférieure du porte-capsule qui vient en contact avec le rebord de la capsule.

La rainure 8 peut avoir un fond arrondi (comme illustré) ou non. De préférence, la forme de la rainure (et par extension des moyens de déformation 8) coopère avec les moyens déformables 7 de façon à provoquer une déformation dirigées desdits moyens déformables 7.

Les moyens de déformation 8 peuvent être directement formés dans le porte-capsule 2 ou ils peuvent être formés dans une pièce rapportée qui est montée sur le porte-capsule 2. Alternativement, ces moyens de déformation peuvent être aussi partiellement être formés dans le porte-capsule 2 et dans un élément rapporté.

Ces moyens de déformation 8 peuvent également posséder des caractéristiques propres de déformation adaptés aux moyens déformables de telle sorte qu'ils ne sont capables que de déformer des moyens déformables, par exemple qu'ils ne sont capables que d'exercer une certaine force de déformation limitée à une valeur prédéterminée au-delà de laquelle ils subissent eux-mêmes une déformation (par exemple plastique). Ainsi, seules des capsules dont les moyens de déformation se déforment en dessous d'une certaine valeur sont utilisables avec un porte-capsule donné et une utilisation de capsules non-adaptées peut être empêchée.

De préférence, les moyens déformables 7 sont présents sur tout le pourtour de la capsule et, de façon correspondante, les moyens de déformation 8 sont également présents sur tout le pourtour du porte-capsule 2. Alternativement, les dits moyens ne sont pas présents sur l'entier du pourtour de la capsule, respectivement du porte-capsule.

Comme illustré dans la figure, une capsule 1 est introduite dans un porte-capsule 2, les moyens déformables 7 et de déformation 8 étant généralement en regard les uns des autres. Dans la figure 2, le porte-capsule est abaissé et par son mouvement déforme les moyens déformables 7 par les moyens de déformation 8.

Comme on le constate, la déformation se produit de façon dirigée vers l'intérieur, la matière formant les moyens déformable formant un repli.

La figure 3 illustre la position finale du porte-capsule pour l'extraction de la boisson: les moyens déformables sont entièrement "aplatis" formant ainsi un joint d'étanchéité.

Les figures 1 à 3 montrent un dispositif dont le fonctionnement s'effectue selon un axe vertical (mouvement du porte-capsule) mais il est bien entendu que ce mouvement et l'alignement peuvent se trouver selon un autre axe, par exemple horizontal ou autre (par exemple incliné), le principe de l'invention restant le même.

### Références numériques utilisées dans les figures :

- 1.: capsule
- 2.: porte capsule
- 3.: produit
- 4.: corps de capsule
- 5.: fond de capsule
- 6.: rebord de capsule
- 7.: moyens déformables
- 8.: moyens de déformation

## Revendications

1. Capsule pour la préparation d'une boisson comprenant un élément creux (1) destiné à contenir un produit, ledit élément creux (1) comprenant une paroi latérale (4), une face supérieure, une face inferieure (5) et un rebord (6) prolongeant ladite paroi latérale (4), ledit rebord comprend des moyens déformables (7) ayant une forme induisant une déformation dirigée desdits moyens par production d'un repli, **caractérisée en ce que** lesdits moyens déformables sont configurés pour être entièrement aplatis pour former un joint d'étanchéité.

2. Capsule selon la revendication précédente, dans laquelle ladite déformation dirigée se fait vers l'intérieur de la capsule.

3. Capsule selon la revendication précédente dans laquelle les moyens déformables comprennent une collerette (7).

4. Capsule selon la revendication 3, dans laquelle ladite collerette est de forme triangulaire.

5. Capsule selon l'une des revendications précédentes, dans laquelle la déformation des moyens déformables est induite par la forme desdits moyens.

6. Capsule selon l'une des revendications 1 à 5, dans laquelle les moyens déformables sont situés sur tout le pourtour de la capsule.

7. Capsule selon l'une des revendications 1 à 5, dans laquelle les moyens déformables sont situés sur une partie du pourtour de la capsule.

8. Capsule selon l'une des revendications 1 à 5, dans laquelle les moyens déformable sont formés dans et/ou sur le rebord ou rapportes sur ledit rebord.

## Patentansprüche

1. Kapsel für die Herstellung eines Getränks, umfassend ein hohles Element (1), das bestimmt ist, ein Produkt zu enthalten, wobei das hohle Element (1) eine Seitenwand (4), eine Oberseite, eine Unterseite (5) und einen Rand (6) umfasst, der die Seitenwand (4) verlängert, wobei der Rand verformbare Mittel (7) mit einer Form umfasst, die eine gerichtete Verformung der Mittel durch Herstellen einer Falte zu induzieren, **dadurch gekennzeichnet, dass** die verformbaren Mittel konfiguriert sind, um vollständig abgeflacht zu sein, um eine Dichtung zu bilden.

2. Kapsel nach vorangehendem Anspruch, wobei die gerichtete Verformung zum Innern der Kapsel erfolgt.

3. Kapsel nach vorangehendem Anspruch, wobei die verformbaren Mittel einen Kragen (7) umfassen.

4. Kapsel nach Anspruch 3, wobei der Kragen dreieckig ist.

5. Kapsel nach einem der vorangehenden Ansprüche, wobei die Verformung der verformbaren Mittel durch die Form der Mittel induziert wird.

6. Kapsel nach einem der Ansprüche 1 bis 5, wobei sich die verformbaren Mittel auf dem gesamten Umfang der Kapsel befinden.

7. Kapsel nach einem der Ansprüche 1 bis 5, wobei sich die verformbaren Mittel auf einem Teil des Umfangs der Kapsel befinden.

8. Kapsel nach einem der Ansprüche 1 bis 5, wobei die verformbaren Mittel im und/oder auf dem Rand gebildet oder auf dem Rand angebracht sind.

## Claims

1. A capsule for preparing a beverage comprising a hollow element (1) intended to contain a product, said hollow element (1) comprising a side wall (4), an upper face, a lower face (5) and a rim (6) extending said side wall (4), said rim comprising deformable means (7) having a shape causing a directed deformation of said means by producing a fold, **characterized in that** said deformable means are configured to be completely flattened to form a sealing gasket.

2. The capsule according to the preceding claim, wherein said directed deformation occurs toward the inside of the capsule.

3. The capsule according to the preceding claim, wherein the deformable means comprise a flange ring (7).

4. The capsule according to claim 3, wherein said flange ring is triangular.

5. The capsule according to one of the preceding claims, wherein the deformation of the deformable means is induced by the shape of said means.

6. The capsule according to one of claims 1 to 5, wherein the deformable means are situated on the entire perimeter of the capsule.

7. The capsule according to one of claims 1 to 5, wherein the deformable means are situated on a part of the perimeter of the capsule.

8. The capsule according to one of claims 1 to 5, wherein the deformable means are formed in and/or on the rim or attached on said rim.
